# EUROPEAN PATENT APPLICATION

(11) **EP 2 587 432 A1**
(43) Date of publication of application: **01.05.2013**
(21) Application number: 12182856.0
(22) Date of filing: 03.09.2012
(51) Int. Cl.: G06Q 20/32, G07F 19/00

(54) **Self-service terminal transactions**

(30) Priority: 15.11.2011 US 201113296359; 31.10.2011 US 201113285386
(71) Applicant: NCR Corporation, Duluth, GA 30096 (US)
(72) Inventor: Kobres, Erick, Lawrenceville, GA 30043 (US); Bertrand, Mouden, 91440 Bures sur Yvette (FR)
(74) Representative: MacLeod, Roderick William

(57) **Abstract**

Techniques for automated transactions are provided. A customer pre-stages a financial transaction with a financial service. Subsequently, the customer visits an SST, such as an ATM, and automatically acquires a code from the SST that is then sent to a mobile transaction service (which may be the same as the financial service) for verification and to identify the staged financial transaction. The SST interacts with the financial service to complete the transaction for the customer at the SST.

## Description

Consumers are increasingly using self-service terminals (also known as kiosks) to conduct business with enterprises. The kiosks come in a variety of sizes and are used for a variety of purposes. Some kiosks are situated at drive-through locations, such as fast food establishments, pharmacies, banks, and the like. Other kiosks are located at pedestrian access locations, such as petrol stations, airlines, grocery stores, department stores, and the like.

In addition, what is considered a kiosk is evolving with today's technology. For example, digital signs now provide advertisements and mechanisms for users to interact with the displays to perform transactions. Such mechanisms include blue tooth communication, Near Field Communication (NFC), Quick Response (QR) code scanning, WiFi communication, and the like.

So, increasingly customers are engaging in a variety of technologies to automatically interact with enterprises to perform transactions. The transactions may result in purchases or may result in such things as registration for loyalty programs, enrolling in promotional events, requesting additional information for a good or service, and others. That is, the transactions via these kiosks are not strictly tied to purchases although some transactions are purchase related.

On particular type of kiosk that everyone is familiar with is the traditional Automated Teller Machine (ATM). These are situated at locations where consumers often need some cash, which may be outside of enterprises, such as banks and grocery stores, or even inside stores and venues. In fact, ATM's are ever present in society.

Of particular concern with the ATM is security. The main security deterrents used in the industry are related to physical lighting located around the ATM's and cameras that are embedded in the machines and that may even surround the machines. This type of security still has drawbacks because thieves are getting smarter and have devices that can detect the passcode entered for ATM cards used by consumers at an ATM, or even duplicate the card. In fact, in crowded venues someone can simply look over the shoulder of a customer and detect a pass code being entered. Banks and financial institutions are always looking for ways to thwart these electronic and human eavesdroppers.

Other problems that need to be addressed in the prior art include: improved usability for kiosks, particularly for those with physical or cognitive impairments, shorter transaction times, easier human-kiosk interaction, and the like.

In various embodiments, techniques for automated teller machine (ATM) transactions are presented. According to an embodiment, a method for an automated transaction with an ATM is provided.

Specifically, a financial service interacts with a customer to define a transaction to perform subsequently at an Automated Teller Machine (ATM) during an out-of-band transaction between the customer and the ATM. The financial service stages the transaction along with a customer identifier for the customer and sends a financial transaction identifier to a mobile app of a mobile device of the customer for use when at the ATM in performing the staged transaction. Finally, the financial service sets policy restrictions for when an unprocessed staged transaction is to be removed and declared invalid.

According to a first aspect of the present invention there is provided a method of transmitting a transaction to a self-service terminal, the method comprising: receiving a pre-staged transaction from a customer for subsequent execution at a self-service terminal; storing the received transaction together with a customer identifier for the customer; at a subsequent time, when the customer is located at a self-service terminal, receiving from the customer (i) a self-service terminal identification message, and (ii) the customer identifier; identifying the stored transaction associated with the received customer identifier; authenticating the self-service terminal identification message; and transmitting the identified stored transaction to the self-service terminal in the event that the self-service terminal identification message is authenticated.

Optionally, the step of receiving a transaction request from a customer for subsequent execution at a self-service terminal includes the sub-step of receiving a customer identifier automatically transmitted by a mobile application used by the customer to create the transaction request.

Optionally, the step of receiving from the customer (i) a self-service terminal identification message includes the sub-step of receiving from a mobile application a data string including code generation information, code expiry information, and GPS location information.

Optionally, the step of receiving from the customer (ii) the customer identifier includes the sub-step of receiving a customer identifier automatically transmitted by a mobile application as part of a communication.

Optionally, the method comprises the further steps of: creating a self-service terminal identification message; and transmitting the created self-service terminal identification message to a self-service terminal, prior to the step of receiving a transaction request from a customer for subsequent execution at a self-service terminal.

Optionally, the step of authenticating the self-service terminal identification message includes comparing information from created self-service terminal identification message with corresponding information from the data string.

According to a second aspect of the present invention there is provided a self-service terminal comprising: a display for presenting information to a customer; and a controller operable (i) to communicate with a web service to request a self-service terminal identification message therefrom, (ii) to receive the self-service terminal identification message, (iii) to transform the received self-service terminal identification message into a visual code, (iv) to render the visual code on the display, and (v) to execute a transaction in response to a request received from the web service.

Optionally, the visual code comprises a 2D barcode.

Optionally, the controller is further operable (vi) to identify expiry of the self-service terminal identification message, and (vii) to repeat steps (i) to (iv) in response to detection of expiry of the self-service terminal identification message.

Optionally, the controller is operable to execute a transaction in response to a request received from the web service without requiring any customer contact with the self-service terminal.

Optionally, the controller is operable to execute a transaction in response to a request received from the web service only after the customer has entered a correct personal identification number at the self-service terminal.

Optionally, the self-service terminal comprises an ATM including a cash dispenser.

According to a third aspect of the present invention there is provided a processor-implemented method programmed in a non-transitory processor-readable medium and to execute on one or more processors of a server configured to execute the method, comprising: interacting, at the server, with a customer to define a transaction to perform at a subsequent Automated Teller Machine (ATM) during an out-of-band transaction between the customer and the ATM; staging, at the server, the transaction along with a customer identifier for the customer; sending, from the server, a financial transaction identifier to a mobile app of a mobile device of the customer for use when at the ATM in performing the staged transaction; and setting, at the server, policy restrictions for when an unprocessed staged transaction is to be removed and declared invalid.

Optionally, interacting with a customer to define a transaction further includes providing a web site interface to the customer.

Optionally, providing a web site interface to the customer further includes interacting with the customer at the website via a device that is different from a mobile device of the customer, the mobile device used to perform the out-of-band transaction with the ATM.

Optionally, providing a web site interface to the customer further includes interacting with the customer at the website via a mobile device of the customer, the mobile device used to perform the out-of-band transaction with the ATM.

Optionally, interacting with a customer to define a transaction further includes defining the transaction via a mobile app on a mobile device of the customer, the mobile device used to perform the out-of-band transaction with the ATM.

Optionally, setting policy restrictions for when an unprocessed staged transaction is to be removed and declared invalid further includes defining the policy restrictions to include conditions for: how long the staged transaction is permissible to be unprocessed at the ATM, which bank the ATM is affiliated with, and the physical location of the ATM.

Optionally, the method further comprises: receiving the financial transaction identifier from a mobile transaction service that identifies the ATM and confirms validation of the customer that is now at the ATM to process the staged transaction.

Optionally, the method further comprises: ensuring the policy restrictions are valid, and establishing a connection with the ATM.

Optionally, the method further comprises: instructing the ATM to dispense cash when the staged transaction is a cash withdrawal.

Optionally, the method further comprises: instructing the ATM to verify a Personal Identification Number (PIN) sent from a mobile device of the customer before proceeding with the transaction.

Optionally, the method further comprises: instructing the ATM to send a receipt to a mobile device of the customer and/or print a receipt for processing the transaction based on profile data for the customer.

According to a fourth aspect of the present invention there is provided a processor-implemented method programmed in a non-transitory processor-readable medium and to execute on one or more processors of a mobile device configured to execute the method, comprising: obtaining, at the mobile device, a unique transaction code from an ATM at a beginning of a transaction with the ATM; transmitting, from the mobile device, the unique transaction code along with a mobile device identifier and a financial transaction identifier to a mobile transaction service, the financial transaction identifier identifies a staged transaction at a financial service previously performed by the customer; and interacting, from the mobile device, with the ATM to complete the transaction.

Optionally, obtaining a unique transaction code from an ATM further includes activating a camera of the mobile device to scan the unique transaction code from a display of the ATM, the unique transaction code comprising a barcode, such as a Quick Response code.

Optionally, obtaining a unique transaction code from an ATM further includes activating a near field communication device of the mobile device to acquire the unique transaction code from the ATM.

Optionally, transmitting the unique transaction code along with a mobile device identifier and a financial transaction identifier further includes authenticating the mobile device and/or a customer of the mobile device to the mobile transaction service after transmitting the unique transaction code and the mobile device identifier.

Optionally, transmitting the unique transaction code along with a mobile device identifier and a financial transaction identifier further includes authenticating, via the mobile device, to the financial service via the ATM.

Optionally, transmitting the unique transaction code along with a mobile device identifier and a financial transaction identifier further includes digitally signing the unique transaction code with a private key of: a customer of the mobile device or the mobile device to provide authentication to the mobile transaction service.

According to a fifth aspect of the present invention there is provided a processor-implemented method programmed in a non-transitory processor-readable medium and to execute on one or more processors of a server configured to execute the method, comprising: receiving, via the server, a request for a unique transaction code from an automated teller machine (ATM); sending, from the server, the unique transaction code customized for the ATM; receiving, at the server, the unique transaction code, a mobile device identifier, and a financial transaction identifier, sent from a mobile device of a customer that acquires the unique transaction code from the ATM; contacting, from the server, a financial service with a customer identifier for the customer, an ATM identifier for the ATM included in the unique transaction code, and the financial transaction identifier; and passing, from the server, control to the financial service to interact with the ATM for purposes of completing the financial transaction.

Optionally, the method further comprises: automatically collecting a processing fee from the financial service or the customer, via the mobile device, or collecting the processing fee from both the financial service and the customer.

Optionally, receiving the unique transaction code from the mobile device further includes identifying the financial service via the financial transaction identifier.

These and other aspects of the present invention will be apparent from the following specific description, given by way of example only, with reference to the accompanying drawings, in which:

FIG. 1 is a sequence diagram for an SST system, illustrating steps performed by different parts of the SST system, according to an example embodiment of the present invention;

FIG. 2 is a flow chart illustrating steps implemented by one part (the financial service, also called the bank web service) of the SST system of FIG. 1;

FIG. 3 is a flow chart illustrating steps implemented by another part (the mobile app) of the SST system of FIG. 1;

FIG. 4 is a flow chart illustrating steps implemented by yet another part (the mobile transaction web service) of the SST system of FIG. 1; and

FIG. 5 is a flow chart illustrating another embodiment of the present invention, where the functions of the financial service and the mobile transaction web service are combined into a single financial web service.

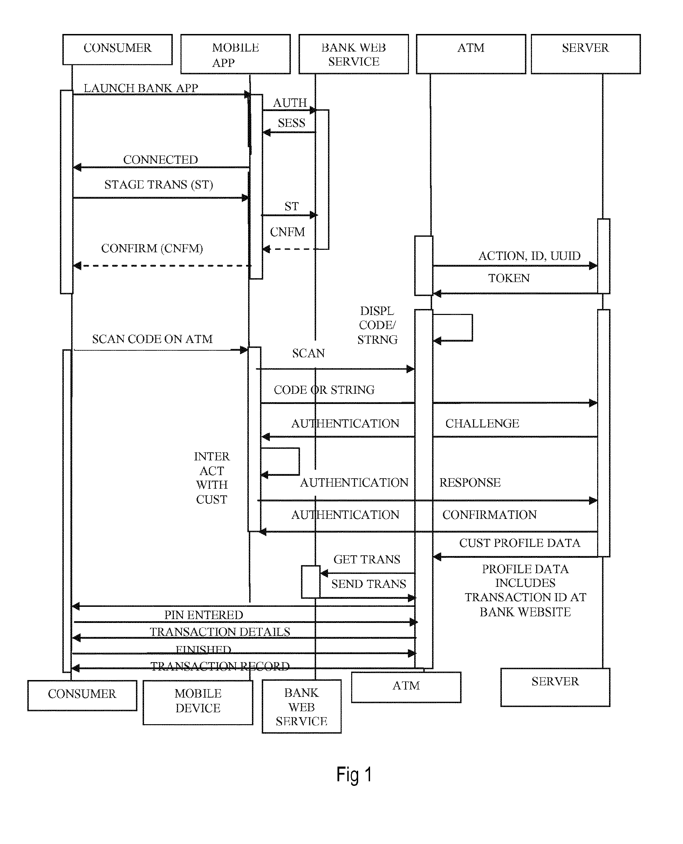

FIG. 1 is a flow diagram for an ATM transaction, according to an example embodiment. The components of the diagram are implemented in non-transitory computer-readable storage medium for execution on one or more processing devices that are configured to execute the components. The components are also enabled to operate and communicate with one another over a network. The network can be wired, wireless, or a combination of wired and wireless.

It is noted that the components and the interactions of the components shown in the FIG. 1 are presented for illustrative purposes in a sample scenario with a sample enterprise system. Other arrangements and interactions of the components are possible without departing from the beneficial teachings presented herein and below.

As will be more fully explained herein and below, the techniques and embodiments presented below enable a consumer to finalize a "staged" ATM transaction that was previously created by the customer either on their mobile device or online via a different device. The solution works without the need for the customer to insert their card into the ATM, and without NFC, which is the typical use-case brought forth in the ATM industry. Although as will be presented below NFC can be used in some scenarios in manners different from what the industry has proposed. In a typical embodiment presented herein, the ATM presents a 2D barcode to the consumer containing identifying information that can be used to retrieve the pre-staged transaction and execute it on the ATM. The consumer uses the bank's mobile application to connect to the transaction and confirm they are at the ATM ready to transact business.

The consumer launches a financial institution mobile application (labelled "mobile app" in FIG. 1) on his/her smart phone. The mobile application is configured to access a mobile transaction service (labelled "bank web service" in FIG. 1). The mobile application may include some stored identification information to allow that mobile transaction service to confirm that authenticity of the mobile application.

The mobile application establishes a connection with the mobile transaction service.

The consumer, using the mobile application, selects the desired transaction type from any of the types made available by the mobile application. For example, cash withdrawal, deposit, or printed account statement. Other transaction types may be available, as offered by the financial institution.

The consumer, using the mobile application then stages the transaction by satisfying the parameters of the transaction - for example the amount of cash to withdraw, deposit amount, statement period, etc.

Alternatively, the customer may interact with the bank's web site to select the transaction type and stage the transaction.

Once staging is complete, the transaction need not be present on the mobile device, rather, it is associated with a consumer identification token, created in the enrollment process, and is stored within the mobile transaction service.

In either case, a business web application (executing on the ATM and labelled "ATM" in FIG. 1) calls a mobile transaction web service (labelled "server" in FIG. 1) with a transaction Identifier (ID), unique session ID, or other information necessary for the ATM to conduct such transactions.

The mobile transaction web service returns barcode and string data containing the portal Uniform Resource Locator (URL) link and the unique transaction ID, digitally signed with the private key of the business.

The ATM formats the barcode or string such that the consumer's mobile device can acquire the string. This is presented on the display of the enterprise's ATM.

The ATM blocks, or otherwise subscribes for notification from the service, awaiting confirmation that the ATM is to process a transaction for a consumer.

It should be appreciated that the steps of calling, returning, and formatting the data (referred to in the three preceding paragraphs) comprise code-refreshing steps, and these code-refreshing steps may be asynchronous of the customer steps of pre-staging a transaction. In other words, the code-refreshing steps may be performed whenever a code expires, and a code may be valid for multiple customer transactions.

The consumer uses the business or financial institution mobile app to acquire the string via the barcode rendered by the ATM on the screen of the ATM, or via another suitable mechanism, such as NFC tap of mobile device on the ATM.

The business or financial mobile app of the mobile device then connects to the mobile transaction web service via a secure connection, either through existing Over-The-Air (OTA) data connection, WiFi, SMS or other mechanism and presents the string as captured and decoded by the mobile device.

Optionally the consumer authenticates with the mobile transaction web service via their mobile device with a secret identifier, such as a Personal Identification Number (PIN), secure element token, biometrics or other method.

The consumer is presented with a transaction summary and total amount, previously returned from the mobile transaction service.

The consumer selects acceptance of any levied service fees and proceeds.

The selections are confirmed, and the mobile transaction service returns a transaction authorization code and any other relevant information required to complete the transaction at the Kiosk.

Optionally, the mobile device may receive transaction updates, an electronic receipt or other information related to the transaction.

It should be appreciated that the barcode presented on the display of the enterprise's ATM may persist for more than one customer transaction. In other words, the ATM does not need to download a new barcode for each transaction.

Some example scenarios and benefits are now presented in the context of the FIG. 1

Initially, a customer downloads a smart phone application (the mobile app) from a financial institution (such as a bank) with which the customer has a bank account. When this occurs, the bank allocates a customer identification token to the customer.

The customer then uses the mobile app to pre-stage a transaction. The mobile app may require the customer to enter his/her PIN, which may be identical to the PIN used by the customer in combination with his/her ATM card, or it may be a different PIN. Alternatively, the transaction can be pre-staged using another networked device (such as a laptop or tablet PC) (an out-band-mechanism) via an online connection with the financial service).

Next, the consumer selects his/her transaction details, via the mobile app or online as discussed above. These details can include a variety of information, such as: transaction type (withdrawal, deposit, balance, and the like), cash amount, type of receipt delivery (paper, Short Message Service (SMS) text message, email, etc.), preferred notes or denominations of the cash received, and the like.

Next, the customer physically goes to an ATM and stands in front of the ATM. The consumer uses the mobile app to scan a Quick Response (QR) code (trade mark) displayed on an ATM screen during the idle loop.

The QR code is dynamically acquired by the ATM (via interaction with the mobile transaction service as discussed above) and includes such fields as: ATM ID; date & time of QR generating; date and time of QR expiry; and cryptic information (the information encoded in the QR code being displayed). The QR code provides reliable and secure information to identify the ATM and establish a reliable connection between the mobile app of the consumer and that ATM (which is the ATM that the consumer is standing in front of).

In this embodiment, the QR code does not include any information specific to the customer transaction. This enables the same QR code to be used for multiple successive customer transactions until the date and time of the QR code expiry is reached.

The QR code information is sent from the mobile app to the bank phone server (mobile transaction service), and includes details of the mobile app to indicate which mobile device is in front of that ATM. In other words, the unique QR code allows the mobile transaction service to be confident that the transaction to be executed by an ATM relates to the person standing in front of that ATM.

Next, in some embodiments, the mobile app can request the customer to enter a PIN on the smart phone.

If authorized, or if an authorization is not required, the mobile transaction service identifies the previously staged transaction (referred to as a pre-staged transaction) for that customer. This is necessary because the financial service may store hundreds of pre-staged transactions that have not yet been executed. The pre-staged transaction is associated with the customer's identification token. The mobile transaction service locates and sends the pre-staged transaction to the ATM with an instruction for the ATM to process the transaction immediately.

The customer takes his/her cash; and optionally a receipt is received on the smart phone for the transaction.

The ATM then sends a message to a transaction host and the financial service to indicate that the transaction was completed successfully. The transaction host then updates the customer's account by debiting the amount of money dispensed to the customer.

It should be appreciated that the financial service may be implemented by the transaction host, or separate services may be used.

A variety of options can be used such that other financial transactions can be processed and different types of authentication used. The security mechanisms used can be dictated by the financial institution and/or ATM operator. The bank may require a minimum amount of security and set maximum withdrawal amounts.

The techniques herein rely on mobile device (such as smart phone, tablet, and the like) security and does not rely on traditional card-based security with the use of ATM keyboards, since no cards and no ATM keyboard are used to achieve the techniques discussed herein.

The benefits of the approach are many. For example, convenience is achieved because consumers use their own devices to define all needed input information, rather than the ATM; plus receipts are automatically delivered to the mobile device. With respect to security, the consumer spends less time in front of the ATM for withdrawal or deposit, so card fraud is diminished (no card skimming or fishing available). New users for a bank do not have to be issued physical cards to have ATM services available to them. There is not contact with the bacterial infested keyboards of the ATMs. No paper is printed so the approaches are environmentally friendly. The techniques can be used with existing ATM's and mobile devices with no upgrades needed. ATM customers who have a physical or cognitive disability may prefer to use this transaction because no physical contact with the ATM is required to select a transaction, so that there is no difficulty in having to reach for a keyboard, or to insert an ATM card into a card reader slot. Similarly, transaction times may be reduced.

Essentially, a mobile device or smart phone is used to: prepare the ATM transaction, authenticate the consumer, identify and couple the consumer with the ATM, confirm the transaction, receive output, if any from the transaction, and receive the transaction receipt.

The ATM is used to: tag itself with a unique ID (as provided by the mobile transaction service); display instructions; and deliver the transaction (deliver cash), when the transaction is for cash to be dispensed.

The ATM and mobile device are linked by a QR code (barcode or token). That Code is displayed on the ATM and scanned with the mobile device. May also be acquired as a token using NFC by tapping the mobile device to the ATM to acquire the token.

Again, a sample smart ATM withdrawal can be described as follows: user authenticates himself when using the bank smart phone application. User prepares his withdrawal on his/her smart phone or on another device interacting with a mobile transaction service of the bank. The details are entered for the transaction as, for example: €50 with electronic receipt. Facing the ATM, the user uses his/her smart phone to scan the QR code displayed in the idle loop screen of the ATM (or on a permanently displayed frame of the ATM screen). The QR code includes at least: ATM ID and a key based on time. The ATM dispenses the prepared withdrawal request. The smart phone receives the receipt. An ATM transaction host updates the user's bank account to deduct the amount dispensed to the user.

The benefits of this are: easy automated processing, mobile device users already like to use their mobile apps for everyday life transactions and they will find it natural and convenient to use the same and unique device to prepare and get cash from an ATM.

Financial institutions will like the techniques because it provides a mechanism for new servers and new consumers with mobile device accessibility. This can be viewed as an add-on service to existing ATM's; the objective does not have to be (although it can be) to replace ATM cards but to add a new and easy service to reach new customers and improve ATM Return On Investment (ROI).

The techniques also provide an opportunity to improve the image of any bank that can offer this service to their consumers. It also improves overall bank efficiency, since a prepared withdrawal is obviously much faster than a legacy one, which means fewer queues on the ATMs.

Smart withdrawal security could be re enforced using: withdrawal ceilings to limit fraud intentions; and PIN codes could be used to reinforce consumer authentication for a smart withdrawal typed on the smart phone or the ATM. GPS information retrieved from the user's smart phone and transmitted to the mobile transaction web service may also be used to check mobile position/ATM position.

Some other embodiments can include: staging transactions directed to third-parties (family members, children, etc.); finding a physically closest ATM using GPS information for the mobile device; applying the techniques to other financial transactions such as deposits, or have the ATM send a token as cash to the mobile APP for use as cash on the mobile device, electronic wallet type approach.

The FIG. 1 shows a sample flow of the description provided above, where the "Server" refers to the financial service discussed below.

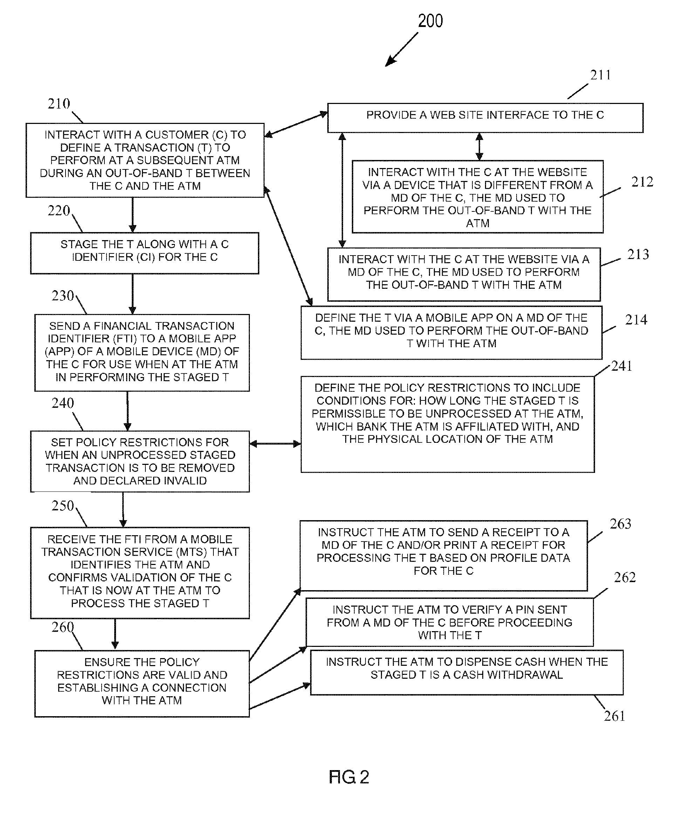

FIG. 2 is a diagram of a method 200 for an ATM transaction, according to an example embodiment. The method 200 (hereinafter "financial service") is implemented as instructions programmed and residing on a non-transitory computer-readable (processor-readable) storage medium and executed by one or more processors. The processors are specifically configured and programmed to process the financial service. The financial service operates over a network. The network is wired, wireless, or a combination of wired and wireless.

The financial service executes on one or more processors of a server. In some embodiments, the financial service operates in a cloud processing environment and is available as a cloud service over the Internet to enterprises and consumers.

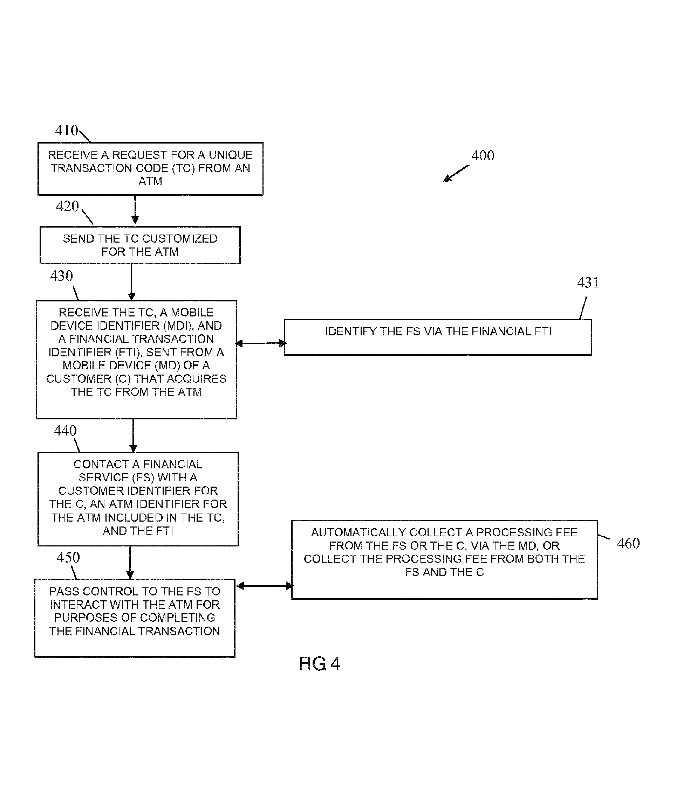

The processing of the financial service interacts with consumer mobile device apps, applications and services of enterprise ATMs, and a mobile transaction service (discussed below with reference to the FIG. 4).

At 210, the financial service interacts with a customer to define a transaction to perform subsequently at an ATM during an out-of-band transaction between the customer and the ATM. In other words, the time when the transaction is defined is different and perhaps uses a different device (from the point-of-view of the customer) for that which the customer uses to execute the transaction. The transaction can be any type of transaction that the bank permits to be executed via an ATM, such as cash withdrawals, deposits, balance inquiries, transfer of funds between accounts with a same financial institution, and/or transfer of funds between accounts of different institutions.

In an embodiment, at 211, the financial service provides a web site interface to the customer for defining the transaction. This can be accomplished by the customer via different devices and mechanisms.

For example, at 212, the financial service interacts with the customer at the website via a device that is different from a mobile device of the customer. The mobile device is used to perform the out-of-band transaction with the ATM at some subsequent point in time.

In another instance of 211 and at 213, the financial service interacts with the customer at the website via a mobile device of the customer. Again, the mobile device is subsequently used to perform the out-of-band transaction with the ATM.

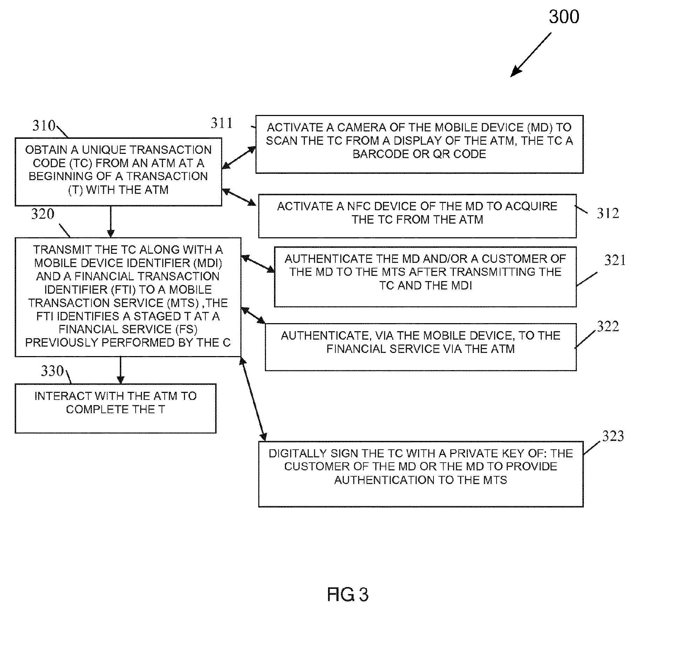

In yet another situation at 214, the financial service defines the transaction via a mobile app (discussed below with reference to the FIG. 3). The mobile app processes on the mobile device and is subsequently used to perform the out-of-band transaction with the ATM. Here, custom screens within the mobile app permit defining of the transaction and this can be achieved without a website via an API with the financial service of the customer and through the mobile app. It may also be that the customer is near or at an ATM when the transaction is defined such that the delay in performing the out-band-transaction between the mobile device and the ATM can be short in duration. In fact, it can be any duration permitted by the financial service, short, medium, long, etc.

At 220, the financial service stages the transaction along with a customer identifier for the customer.

At 230, the financial service sends a financial transaction identifier to a mobile app of a mobile device of the customer for use when at the ATM in performing the staged transaction.

In some embodiments, the processing of 230 may not be necessary because the processing associated with the mobile transaction services (discussed below with reference to the FIG. 4) can be combined with the financial service's processing and the customer may be required to use an ATM of the financial institution associated with the financial service. In other words, suppose the customer is an account holder of Chase (trade mark) Bank, and Chase Bank operates or controls the financial service and the mobile transaction service and also distributes the mobile app. The Customer when using a Chase Bank ATM would not have to have or even know about a financial transaction identifier or financial service identifier because in each case the direction of the processing can be resolved. However, in embodiments and in the real world customers often cannot find their financial institution's ATM and are often forced to use ATM's of other financial institution's that charge fees. In fact, some financial services, such as brokerage firms do not even have their own ATM's and rely on third-party institutions and their ATM's to provide money access to their customers. So, even though the processing at 230 discusses providing a financial transaction identifier (can be financial institution identifier as well because once the financial institution and the customer are known, the staged transaction can be found), this does not always have to be the case. As was discussed in detail above with reference to the FIG. 1.

At 240, the financial service sets policy restrictions for when an unprocessed staged transaction is to be removed and declared invalid. That is, the financial service can use financial institution defined policy restrictions and/or customer driven security restrictions identified as the policy restrictions to invalidate an unprocessed staged transaction. This is for security purposes.

According to an embodiment, at 241, the financial service defines the policy restrictions to include conditions for such things as, and by way of example only: how long the staged transaction is permissible to be unprocessed, which bank or financial institution the ATM has to be affiliated with, and a physical location or geographical area for which the selected customer ATM must reside to perform the staged transaction.

In an embodiment, at 250, the financial service receives the financial transaction identifier from a mobile transaction service (discussed above with reference to the FIG. 1 and below with reference to the FIG. 4) that identifies the ATM and confirms validation of the customer as now being at the ATM and requesting to now process the staged transaction.

Continuing with the embodiment at 250 and at 260, the financial service ensures the policy restrictions are valid and establishes a connection with the ATM that the customer is using.

In one case of 260 and at 261, the financial service instructs the ATM to dispense cash when the staged transaction is for a cash withdrawal.

In another case of 260 and at 262, the financial service instructs the ATM to verify a PIN sent from a mobile device of the customer before processed with the transaction. This PIN is entered in the mobile device and not via the ATM keyboard interface.

In yet another situation of 260 and at 263, the financial service instructs the ATM to send a receipt to a mobile device of the customer and/or print a receipt for the processing of the transaction and based on profile data and selections previously defined by the customer for the transaction. The customer can select an electronic receipt on the mobile device, a printer receipt from the ATM, or both an electronic and printed receipt.

It is also noted that in some embodiments, the customer in defining the transaction can define it such that a third-party and different customer (such as a family member) can subsequently execute the staged transaction at the ATM. In these cases, the customer that receives the financial transaction identifier (if one is needed as discussed above) is sent to the customer that is authorized to make the transaction at the ATM.

It should also be pointed out that although discussion assumes that the ATM is known, this is not the case, and the ATM is generic and not known until the customer selects a particular ATM to process the staged transaction. Although in some embodiments, a specific ATM can be defined by the customer and in such case that specific ATM has to be used by the customer to perform the staged transaction.

In another variation, the customer may define a staged transaction as a recurring transaction on a defined time period, if permissible by the financial institution. So, suppose a customer knows that once a month or twice a month, the customer will be withdrawing a set amount of cash to meet his/her monthly budget needs. Here, the customer may define such transaction once and it is available during the defined time periods for use multiple times.

FIG. 3 is a diagram of another method 300 for an ATM transaction, according to an example embodiment. The method 300 (hereinafter "mobile app") is implemented as instructions programmed within a non-transitory computer-readable (processor-readable) storage medium that executes on one or more processors of a mobile device (e.g., mobile phone, personal digital assistant (PDA), tablet, laptop, etc.); the processors of the mobile device are specifically configured to execute the mobile app. The mobile app is operational over a network; the network is wired, wireless, or a combination of wired and wireless.

The mobile app is controlled by a consumer (customer and/or user) and interacts with the financial service, represented by the method 200 of the FIG. 2 and also interacts with a mobile transaction service (discussed below with reference to the FIG. 4).

It is noted that the mobile app can be installed and initiated by the consumer on the mobile device in a variety of manners before the processing occurs as detailed below. For instance, in one situation during a registration process of the mobile device with a financial service, the mobile app is downloaded and initiated on the mobile device. In another instance, during an initial contact by the mobile device by activating a QR code for a first time that represents a unique transaction code for a retailer, the financial service is automatically contacted and downloads and installs on the mobile device and initiates a registration process. This may occur when the transaction for the ATM was staged by a device other than the mobile device. The remaining processing described for the mobile app assumes the mobile app is installed and executing on a mobile device of a consumer.

At 310, the mobile app obtains a unique transaction code from an ATM at a beginning of a transaction with the ATM. This is acquired automatically via the mobile device of the customer using the mobile app and acquired without manually accessing a touch screen or keyboard of the ATM. The unique transaction code provided by a mobile transaction service (discussed below with reference to the FIG. 4) or by a financial service of a particular financial institution that deploys the services of the mobile transaction service.

According to an embodiment, at 311, the mobile app activates a camera of the mobile device to scan the transaction code from a display of the ATM. Here, the transaction code is a barcode or a QR code presented on the welcome screen of the ATM.

In another case, at 312, the mobile app activates a NFC device of the mobile device to acquire the transaction code from the ATM's NFC device by tapping the mobile device against the ATM. In this case, the transaction code may be viewed as a NFC token and does not have to be a barcode and/or QR code and may not even be presented on the welcome screen of the ATM. That is, the ATM may just indicate somewhere NFC enabled or staged transaction processing available via NFC and the like, which may or may not be presented to the customer on the welcome screen.

At 320, the mobile app transmits the transaction code along with a mobile device identifier (such as a unique mobile device token previously registered and/or a Media Access Device (MAC) identifier, etc.) and a financial transaction identifier or financial institution identifier to a mobile transaction service (discussed below with reference to the FIG. 4 and discussed above with reference to the FIG. 1). The financial transaction identifier identifies a specific financial institution for the customer and a staged transaction at a specific financial service for that financial institution, the staged transaction previously defined or performed by the customer or by an authorized different customer on behalf of the customer (this processing was discussed in detail above with reference to the FIGS. 1 and 2). It is noted that if the ATM is for the financial institution of the customer then no financial transaction or financial institution identifier may be required to be sent to the mobile transaction service as was also discussed above with reference to the FIG. 2.

According to an embodiment, at 321, the mobile app authenticates the mobile device and/or the customer of the mobile device to the mobile transaction service after transmitting the transaction code and the mobile device identifier (and the financial transaction identifier).

In another case, at 322, the mobile app authenticates, via the mobile device, to the financial service using the ATM. So, the ATM can communicate wirelessly in this embodiment with the mobile app of the mobile device to authenticate the customer, such as via a PIN entry or other security verification.

In yet another situation, at 323, the mobile app digitally signs the transaction code with a private key of: the customer of the mobile device or the mobile device to provide authentication to the mobile transaction service.

Finally, at 330, the mobile app interacts with the ATM to complete the transaction as needed. Here, transaction receipts may be electronically delivered to the mobile device if desired by the customer. Optionally or perhaps additionally the receipt may be printed from the ATM.

FIG. 4 is a diagram of yet another method 400 for an ATM transaction, according to an example embodiment. The method 400 (hereinafter "mobile transaction service") is implemented as executable instructions and programmed within a non-transitory computer-readable (processor-readable) storage medium that executes on one or more processors of the mobile transaction service the processors of server are specifically configured to execute the mobile transaction service. The mobile transaction service is operational over a network; the network is wired, wireless, or a combination of wired and wireless.

The FIG. 1 described the processing for automating an ATM transaction as a whole. The FIG. 2 described the processing from the perspective of the financial service; the FIG. 3 described the processing from the perspective of the consumer's mobile app on a consumer's mobile device; and the mobile transaction service of the FIG. 4 describes the processing from a mobile transaction service. An automated ATM transaction is automated and customized via the interaction among the financial service (of the FIG. 2), the mobile app (of the FIG. 3), and the mobile transaction service (of the FIG. 4).

At 410, the mobile transaction service receives a request for a unique transaction code (hereinafter just "transaction code or token") from an ATM. That is at the conclusion of a previous ATM transaction a new transaction code is sent to the ATM. It may also be that the ATM acquires batches of transaction codes from the mobile transaction service and manages these on its own until depleted and at such time a new batch of transaction codes are requested of the mobile transaction service.

At 420, the mobile transaction service sends the transaction code customized for the ATM to the ATM for display on (display via barcode or QR code) or for acquisition from the ATM (acquisition via NFC).

At 430, the mobile transaction service receives the transaction code, a mobile device identifier (such as a unique mobile device token and/or MAC identifier for the mobile device), and a financial transaction or financial institution identifier. This information is sent from the mobile device of the customer, via the mobile app of the FIG. 3, and the mobile app acquires the transaction code from the ATM, such as a scan of a barcode or QR code, or NFC token via an NFC tap to the ATM.

According to an embodiment, at 431, the mobile transaction service identifies a specific financial service via the financial transaction or financial institution identifier sent from the mobile app of the mobile device with the transaction code.

Again, it is noted that the financial transaction or financial institution identifier is not needed in all cases, but having it permits usage of third-party bank ATM's in an automated manner.

At 440, the mobile transaction service contacts the financial service with a customer identifier for the customer and ATM identifier for the ATM, which was included in the transaction code, and the financial transaction identifier (optionally to identify the specific staged transaction).

At 450, the mobile transaction service passes control to the financial service (as discussed with FIGS. 1 and 2 above) to interact with the ATM for purposes of completing the financial transaction.

In some cases, at 460, the mobile transaction service may not be integrated with any particular financial institution and may be an independent service offered to financial institutions. In such a scenario it may be desirable for the entity providing the mobile transaction service to charge and automatically collect a processing fee from the financial service (or financial institution) and/or the customer, via the mobile device. The processing at 460 accounts for this embodiment and configuration.

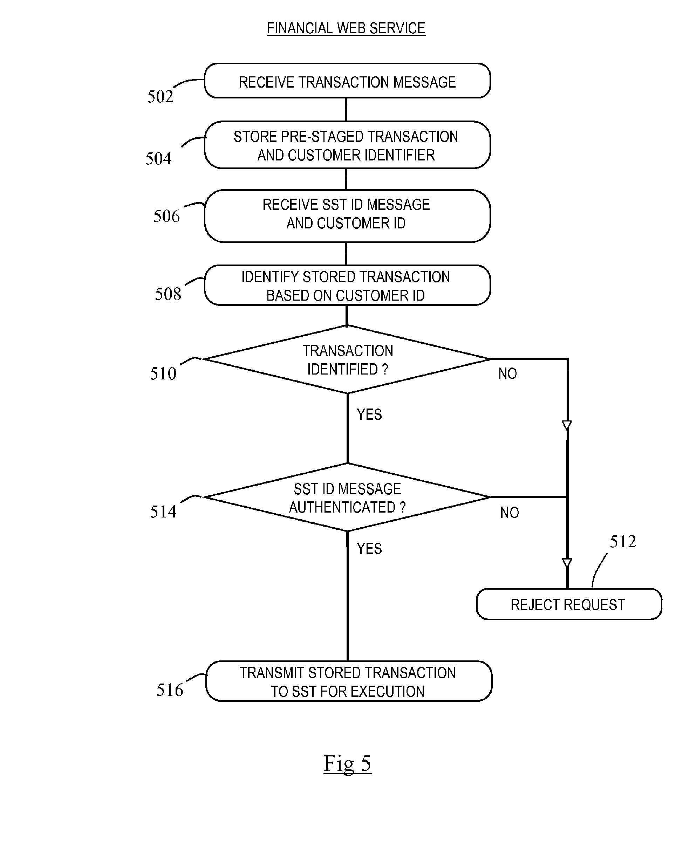

Reference will now be made to FIG. 5, which is another embodiment of the present invention. The FIG. 5 embodiment is a variation of the sequence flow of FIG. 1. In the FIG. 5 embodiment, the financial service (labelled "bank web service" in FIG. 1) and the mobile transaction web service (labelled "server" in FIG. 1) are implemented by the same service. In other words, the same service (referred to as the "financial web service") performs the functions of pre-staging a transaction, and also providing the ATM with QR code information for display at the ATM, as will now be described with reference to FIG. 5, which illustrates the steps performed by the financial web service.

Initially, a customer downloads a smart phone application (the mobile app) from a financial institution (such as a bank) with which the customer has a bank account. When this occurs, the bank allocates a customer identification token to the customer.

The customer then uses the mobile app to pre-stage a transaction. The mobile app may require the customer to enter his/her PIN, which may be identical to the PIN used by the customer in combination with his/her ATM card, or it may be a different PIN. Alternatively, the transaction can be pre-staged using another networked device (such as a laptop or tablet PC) (an out-band-mechanism) via an online connection with the financial web service).

Next, the consumer selects his/her transaction details, via the mobile app or online as discussed above. These details can include a variety of information, such as: transaction type (withdrawal, deposit, balance, and the like), cash amount, type of receipt delivery (paper, Short Message Service (SMS) text message, email, etc.), preferred notes or denominations of the cash received, and the like.

Once the customer has selected the desired transaction type and details, the mobile app transmits this transaction (the pre-staged transaction) together with a customer identifier to the financial web service via a secure connection. The financial web service receives this transaction message (step 502), which comprises the pre-staged transaction and the customer identifier.

The financial web service then stores the received pre-staged transaction and the customer identifier (step 504). The financial web service may also confirm that the customer has sufficient funds to execute this transaction. If the customer does not have sufficient funds, then the transaction request may be denied.

Next, the customer physically goes to an ATM and stands in front of the ATM.

The ATM has previously requested a self-service terminal identification message (an SST ID) from the financial web service. The SST ID message includes such fields as: an SST ID; date & time of QR generating; date and time of QR expiry; and cryptic information (the information encoded in the QR code being displayed). The financial web service creates a unique SST ID message for each ATM (or other type of SST), and stores the created SST ID for future use in authenticating a transaction request (as is described in more detail below).

On receipt of this SST ID message from the financial web service, a controller in the ATM decodes the message, creates a 2D barcode (a QR code in this embodiment) from the information contained in the SST ID message, and renders the 2D barcode on a welcome screen (also called an attract screen) on the ATM.

The customer sees this 2D barcode and uses the mobile app (which can control a camera in the customer's smart phone) to capture a photograph of this 2D barcode. The mobile app then decodes the captured image, and sends a transaction request message to the financial web service. This transaction request message is received by the financial web service (step 506). It should be appreciated that the transaction request message does not include any details of the transaction, only a customer identifier and (part or all of) the SST ID.

The financial web service parses this received transaction request message to identify the appropriate pre-staged transaction associated with that customer (step 508). This is implemented by comparing the received customer identifier with customer identifiers associated with pre-staged transactions (step 510).

If no pending pre-staged transaction can be identified, then the financial web service sends a message to the mobile app to inform the customer that the transaction request has been denied (step 512).

If a pre-staged transaction is identified having a matching customer identifier, then the financial web service authenticates the SST ID message (step 514). This is implemented by comparing the created SST ID message originally sent by the financial web server to the ATM, with the SST ID message received from the mobile app.

If the SST ID message received does not match the created SST ID message, then the financial web service sends a message to the mobile app to inform the customer that the transaction request has been denied (step 512).

If the SST ID message received does match the created SST ID message, then the financial web service transmits a transaction execution message to the ATM, requesting the ATM to execute the transaction without requiring any further input from the customer (step 516).

The ATM executes the transaction, which may involve dispensing the requested funds to the customer, and the customer takes his/her cash. Optionally, a receipt is received on the smart phone for the transaction.

The ATM then sends a message to a transaction host and the financial web service to indicate that the transaction was completed successfully. The transaction host then updates the customer's account by debiting the amount of money dispensed to the customer. The financial web service deletes the pre-staged transaction.

The above description is illustrative, and not restrictive. Many other embodiments will be apparent to those of skill in the art upon reviewing the above description. The scope of embodiments should therefore be determined with reference to the appended claims.

In the foregoing description of the embodiments, various features are grouped together in a single embodiment for the purpose of streamlining the disclosure. This method of disclosure is not to be interpreted as reflecting that the claims have more features than are expressly recited in each claim.

## Claims

1. A method of transmitting a transaction to a self-service terminal, the method comprising:
receiving a pre-staged transaction from a customer for subsequent execution at a self-service terminal (step 210);
storing the received transaction together with a customer identifier for the customer (step 220);
at a subsequent time, when the customer is located at a self-service terminal, receiving from the customer (i) a self-service terminal identification message, and (ii) the customer identifier;
identifying the stored transaction associated with the received customer identifier;
authenticating the self-service terminal identification message; and
transmitting the identified stored transaction to the self-service terminal in the event that the self-service terminal identification message is authenticated.

2. The method of claim 1, wherein the step of receiving a transaction request from a customer for subsequent execution at a self-service terminal includes the sub-step of receiving a customer identifier automatically transmitted by a mobile application used by the customer to create the transaction request.

3. The method of claim 1 or 2, wherein receiving from the customer (i) a self-service terminal identification message includes the sub-step of receiving from a mobile application a data string including code generation information, code expiry information, and GPS location information.

4. The method of any preceding claim, wherein the step of receiving from the customer (ii) the customer identifier includes the sub-step of receiving a customer identifier automatically transmitted by a mobile application as part of a communication.

5. The method of any preceding claim, wherein the method comprises the further steps of: creating a self-service terminal identification message; and transmitting the created self-service terminal identification message to a self-service terminal, prior to the step of receiving a transaction request from a customer for subsequent execution at a self-service terminal.

6. The method of claim 5, wherein the step of authenticating the self-service terminal identification message includes comparing information from created self-service terminal identification message with corresponding information from the data string.

7. A self-service terminal comprising:
a display for presenting information to a customer; and
a controller operable (i) to communicate with a web service to request a self-service terminal identification message therefrom, (ii) to receive the self-service terminal identification message, (iii) to transform the received self-service terminal identification message into a visual code, (iv) to render the visual code on the display, and (v) to execute a transaction in response to a request received from the web service.

8. A self-service terminal according to claim 7, wherein the visual code comprises a 2D barcode.

9. A self-service terminal according to claim 7 or 8, wherein the controller is further operable (vi) to identify expiry of the self-service terminal identification message, and (vii) to repeat steps (i) to (iv) in response to detection of expiry of the self-service terminal identification message.

10. A self-service terminal according to any preceding claim, wherein the controller is operable to execute a transaction in response to a request received from the web service without requiring any customer contact with the self-service terminal.

11. A self-service terminal according to any preceding claim, wherein the controller is operable to execute a transaction in response to a request received from the web service only after the customer has entered a correct personal identification number at the self-service terminal.

12. A self-service terminal according to any preceding claim, wherein the self-service terminal comprises an ATM including a cash dispenser.
